# DEMANDE DE BREVET EUROPEEN

(11) **EP 0 712 721 A1**
(43) Date de publication de la demande: **22.05.1996**
(21) Numéro de dépôt: 95114435.1
(22) Date de dépôt: 14.09.1995
(51) Int. Cl.: B32B 31/00, B29C 70/50, A63C 5/12

(54) **Procédé de fabrication d'un ski collé comprenant une étape de préparation de renfort par voie humide**

(30) Priorité: 21.11.1994 FR 9414071
(71) Demandeur: Salomon S.A., F-74370 Metz-Tessy (FR)
(72) Inventeur: Gagneux Yves, F-74940 Annecy le Vieux (FR); Huyghe, Christian, F-74540 Gruffy (FR)

(57) **Abrégé**

L'invention concerne un procédé de fabrication d'un ski comprenant une première étape de préparation par voie humide d'au moins un élément de renforcement (7) et une seconde étape d'assemblage dans un moule des autres éléments constitutifs du ski avec ledit (lesdits) élément (s) de renforcement (7) obtenu (s) lors de la première étape, caractérisé en ce que la première étape comprend les opérations suivantes réalisées en continu :
- on opère l'imprégnation d'une bande (1) constituée de fibres sèches de renfort avec une résine thermodurcissable liquide contenant un durcisseur ;
- on applique à température ambiante ou à froid sur chaque face (11, 12) de la bande imprégnée (1') un film solide de collage thermofusible (40, 41) qui adhère par simple contact en profitant de la pégosité naturelle de la résine non-réticulée ;
- on découpe la bande ainsi revêtue aux dimensions voulues pour obtenir l' (les) élément (s) de renforcement (7) imprégnés mais manipulables à la main pour la mise en oeuvre de la seconde étape d'assemblage.

Le procédé est plus économique que ceux utilisant des renforts préimprégnés réactivables.

## Description

L'invention concerne un procédé pour la fabrication d'une structure moulée complexe du type ski, utilisés en sport d'hiver et destinés à glisser sur la neige ou la glace.

Les skis actuels présentent un assemblage complexe de différentes pièces collées entre elles et qui assurent différentes fonctions dans le ski. Ainsi, on distingue, en particulier, les éléments de renforcement mécaniques plus couramment dénommés "renforts" espacés de part et d'autre de la fibre neutre et éventuellement sur les côtés et qui confèrent en grande partie les caractéristiques mécaniques du ski. On trouve également des éléments de remplissage et de distribution d'épaisseur comme le noyau dont le rôle est de maintenir à distance idéale les renforts tout en résistant aux contraintes de cisaillement et de compression. Il peut être en bois, mousse, nid d'abeille ou autre. La structure comprend aussi une semelle de glissement formant la face inférieure du ski, des carres métalliques pour l'accrochage sur la neige et généralement un élément de protection et de décoration qui recouvre le ski et le protège des agressions extérieures.

Le caractère composite d'une telle structure conduit à des problèmes de collage entre des éléments incompatibles entre eux. Pour résoudre ce premier problème, la technologie des films de collage s'est récemment développée dans le domaine du ski et permet aujourd'hui de trouver des solutions pour réaliser l'assemblage d'éléments de nature très différentes. On peut citer à titre d'exemple le brevet EP 428 887 (B) qui traite principalement de ces questions.

Auparavant, pour réaliser les renforts, les constructeurs utilisaient le procédé classique de la "voie humide" qui consiste à imprégner en continu les tissus de fibres d'une résine et de durcisseur, à découper le renfort ainsi imprégné à la bonne longueur et à l'introduire manuellement dans le moule. Le renfort est alors dans un état non réticulé dit "stade A" ; mais la réaction exothermique de réticulation commence dès l'imprégnation et le renfort doit donc être utilisé dans les 30 mn qui suivent l'imprégnation ce qui empêche sa sous-traitance et oblige le constructeur à se doter d'un équipement d'imprégnation en continu qui précède la chaîne de fabrication proprement dite du ski.

L'inconvénient majeur d'un tel procédé réside dans le fait que le renfort imprégné de résine s'apparente à un linge mouillé avec un aspect pégueux et sans aucune tenue mécanique. C'est un procédé salissant et qui rend les manipulations délicates et éprouvantes. L'opérateur doit porter des vêtements de protection et les opérations de nettoyage des machines et des lieux doivent être fréquentes. C'est pour ces raisons que ce procédé a été peu à peu abandonné par la plupart des constructeurs.

En revanche, on peut obtenir la réticulation des renforts à des températures assez basses de l'ordre de 100 à 110°C.

Désormais, les constructeurs utilisent de plus en plus des éléments semi-finis appelés "prepegs" constitués d'un ensemble de fibres longues unidirectionnelles, éventuellement tramé, préimprégné de résine à haute réactivité contenant des catalyseurs latents. Ces éléments arrivent chez le constructeur dans un état prédurci dit "phase B" et peuvent être conservés dans cet état pendant plusieurs mois à très basse température (pour certains types de renfort jusqu'à 6 mois à moins 18°C). L'avantage d'utilisation réside dans le fait qu'ils présentent une surface sèche et non visqueuse qui les rend manipulables à température ambiante. Ils présentent également une certaine tenue mécanique qui permet un bon positionnement dans le moule. La réticulation est obtenue à des températures élevées de l'ordre de 130° à 180°C mais dans des temps très courts, de l'ordre de 3 à 10 mn ; ce qui permet de raccourcir les temps de cycle de moulage du ski et d'augmenter les capacités de production de l'outil industriel.

En revanche, le problème essentiel de ce type de renfort est d'ordre économique. Le prix au kilo de ce type de renfort est environ deux fois plus élevé que celui d'un renfort obtenu par voie humide. Pour des skis bas de gamme, il n'est pas opportun d'utiliser ce type de renfort sous peine soit de ne retirer aucune marge commerciale et de fabriquer à perte ; soit de moins renforcer le ski au détriment des caractéristiques de résistance et de skiabilité du ski.

Un autre inconvénient provient des plus fortes températures qu'il est nécessaire d'appliquer lors de la phase ultérieure de moulage du ski pour réactiver la réaction à partir du stade "B", pour obtenir la réticulation suffisante du renfort dans son passage en phase "C". Ceci limite considérablement le choix d'utilisation de certains matériaux pour constituer les autres éléments du ski, qui pour certains se détérioraient à ces températures, comme certaines mousses légères pour le noyau, ou encore certains polyéthylènes extrudés meilleur marché que les Polyéthylènes frittés employés actuellement.

Le document FR-A-2 687 925 concerne un procédé de fabrication d'un ski dans lequel les éléments de renforts, une fois stratifiés, sont revêtus d'un ou plusieurs films de collage dits "compatibilisants" par plaquage à chaud. Ce procédé permet de fabriquer des éléments semi-finis pouvant être sous-traités et stockés pendant plusieurs mois. Ce procédé permet de s'abstenir d'utiliser des matériaux "prepegs" onéreux et qui demandent des conditions de transport et de stockage particulières. En revanche, un inconvénient est qu'il faut opérer une opération préalable de plaquage à chaud du film par des moyens de pressage pour obtenir une bonne adhésion du film sur la bande de renfort.

Le document CH 661 897 (A5) concerne un procédé de fabrication d'un sous ensemble entrant dans la composition d'un ski au cours duquel une bande de couche de renfort humide à base de résine époxy et renforcée par des fibres de verre est portée à une température égale ou supérieure au régime de fusion d'une colle sous forme de bande avec laquelle elle est admise dans l'emprise d'un premier couple de cylindre compresseur pour former une structure bi-couche. La chaleur transmise à la bande de colle est portée en surface à une température supérieure au régime de fusion cristallisant et le collage s'effectue dès la sortie du couple de cylindre par baisse brutale de la température. Un réchauffage de l'autre surface de la bande colle est alors provoquée par une source additionnelle de chaleur puis on effectue le rapprochement d'un film de polyéthylène par un second couple de cylindres compresseurs. Le stratifié obtenu est coupé à la longueur désirée et enroulé pour être ensuite utilisé ultérieurement par le constructeur de ski.

Ce procédé s'adapte particulièrement bien aux sous-traitants pour préparer des produits semi-finis mais est complexe et onéreux pour le fabriquant de ski dont l'objectif est de raccourcir au maximum les opérations nécessaires à la réalisation du ski, limiter les dépenses caloriques et les temps de cycle.

Le but de la présente invention est d'apporter une solution aux inconvénients des techniques précitées pour pouvoir réaliser des skis ayant de bonnes caractéristiques mécaniques tout en étant meilleur marché.

Plus particulièrement, l'un des objets est de réutiliser la technique de fabrication des renforts par "voie humide" en éliminant ses inconvénients tout en conservant ses avantages par rapport à la technique d'utilisation des renforts "prepegs".

En particulier, ce procédé a l'avantage de fournir des renforts qui peuvent facilement épouser des formes complexes ; ce que le spécialiste nomme aptitude au 'drappage'.

Un autre objet de l'invention vise à pouvoir augmenter la liberté du choix des matériaux constitutifs du ski pour faire des skis, soit plus légers, soit plus adaptés à certaines conditions spécifiques d'utilisation, soit moins chers, etc.

Pour cela, l'invention concerne un procédé de fabrication d'un ski comprenant une première étape de préparation par voie humide d'au moins un élément de renforcement et une seconde étape d'assemblage dans un moule des autres éléments constitutifs du ski avec ledit (lesdits) élément (s) de renforcement obtenu (s) lors de la première étape, caractérisé en ce que la première étape comprend les opérations suivantes réalisées en continu :
- on opère l'imprégnation d'une bande constituée de fibres sèches de renfort avec une résine thermodurcissable liquide contenant un durcisseur ;
- on applique à température ambiante ou à froid sur chaque face de la bande imprégnée un film solide de collage thermofusible qui adhère par simple contact en profitant de la pégosité naturelle de la résine non-réticulée;
- on découpe la bande ainsi revêtue aux dimensions voulues pour obtenir l'(les) élément (s) de renforcement imprégnés mais manipulables à la main pour la mise en oeuvre de la seconde étape d'assemblage.

Les films de collage ont un rôle d¹écran qui facilite la manipulation des renforts préimprégnés par voie humide. Ils sont également prédisposés de façon à pouvoir assurer leur fonction ultérieure de collage avec les autres éléments constitutifs du ski. En plus il n'est pas nécessaire d'opérer un traitement thermique des renforts pour obtenir l'adhésion des films préalablement à la seconde étape d'assemblage.

Selon une caractéristique de l'invention, lors de l'étape d'assemblage, l'(les) élément (s) de renforcement est (sont) disposé (s) dans un moule dans son (leur) état encore non-réticulé entre au moins deux éléments à assembler, puis on procède à une opération de chauffage à une température suffisante et pendant un temps suffisant pour provoquer à la fois la réticulation de la résine de l' (des) élément (s) de renfort et la fusion de chaque film de collage qui après refroidissement assurent la jonction entre l'(les) élément (s) de renfort et chacun desdits autres éléments. Ainsi, on profite d'une seule opération de chauffage pour réaliser l'assemblage final ; d'où des économies substantielles d'énergie et un raccourcissement des temps de cycle.

Plus précisément, l'opération de chauffage est réalisée pendant un temps compris entre 10 et 20 mn, de préférence 12 mn et à une température comprise entre 90 et 110°C, de préférence 100°C. Compte tenu des faibles températures, on peut choisir pour les éléments à coller parmi des matériaux plus sensibles à la chaleur et qui ont des propriétés que d'autres matériaux plus résistants à la chaleur n'ont pas.

D'autres caractéristiques et avantages de l'invention se dégageront de la description qui va suivre en regard des dessins annexés, qui ne sont donnés qu'à titre d'exemples non limitatifs.

La figure 1 est une vue schématique de la première étape du procédé selon l'invention.

La figure 2 est une vue en coupe transversale d'un élément de renforcement obtenu au cours de la première étape.

La figure 3 illustre un exemple de la seconde étape d'assemblage du ski.

La figure 4 est une vue en coupe transversale d'un exemple de ski fini selon l'invention.

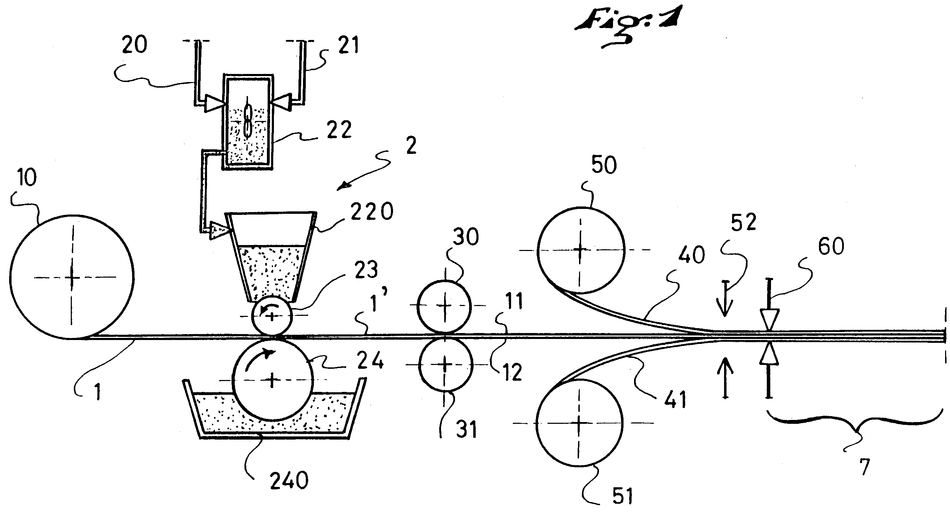

La figure 1 fournit une représentation schématique de la première étape du procédé selon l'invention, au cours de laquelle on réalise les éléments de renforcement qui rentrent dans la composition du ski à fabriquer et qui sont utilisés dans la seconde étape d'assemblage proprement dite.

Une bande de fibres sèches de renfort (1) disponible sous forme d'un rouleau (10) alimente en continu un dispositif d'imprégnation (2). La bande se présente comme un tissu composé majoritairement de fibres unidirectionnelles avec ou sans fibres transversales constituant la trame. Communément, le tissu comprend entre 80 et 100% de fibres constituant la chaîne et 0 à 20% de fibres constituant la trame. Les fibres sont choisies parmi les matériaux du type verre, carbone, aramide ou autres et peuvent être mélangées. L'épaisseur du tissu peut varier de 0,2 mm à 2 mm environ selon les cas.

Le dispositif d'imprégnation (2) comprend une alimentation en résine thermodurcissable epoxyde (20) et une alimentation en durcisseur tel qu'un catalyseur réticulant (21) qui aboutissent à un mélangeur (22). Le mélange durcisseur/résine alimente un bac principal d'imprégnation (220) qui comprend un orifice à sa base, partiellement obturé par un rouleau d'alimentation (23). On règle le taux de résine en faisant varier l'écartement entre le rouleau d'alimentation (23) et l'orifice du bac (22) ou encore en faisant varier la vitesse d'alimentation de la bande de fibres (1). L'excédent de résine est recueilli dans un bac inférieur (24) situé sous le dispositif. Un deuxième rouleau (24) d'alimentation inférieure permet d'imprégner complètement la surface inférieure de la bande (1). La phase d'imprégnation se fait à la température ambiante.

La bande (1') ainsi imprégnée de résine passe ensuite dans un couple de cylindres calibreurs (30, 31) pour éliminer le surplus de résine. Cette opération d'essorage permet par compression de ramener le taux de résine époxyde à un seuil défini. L'opération d'essorage permet de contrôler précisément la partie pondérale de résine dans le renfort pour ne pas alourdir la structure du ski. Elle permet aussi d'éviter les débordements latéraux de résine de la bande après accostage des films de collage et contribue à rendre le procédé parfaitement propre.

Après cette opération, la bande calibrée contenant la résine non réticulée reçoit sur chacune de ses faces (11, 12) un film solide de collage thermofusible (40, 41). Des rouleaux entraînés (50, 51) alimentent en plus la bande de renfort (1).

L'adhérence entre les films et la surface de la bande imprégnée se fait par simple contact sans opération de ramollissement par chauffage des films. Selon un point essentiel de l'invention, on profite uniquement de la pégosité de la résine pour réaliser l'accostage des films. Pour obtenir un parfait plaquage, les films sont légèrement prétendus et un rideau (52) d'air pulsé est dirigé sur chaque face (11, 12) transversalement par rapport à la bande de renfort.

L'étape de préparation de l'élément de renforcement se termine par une opération de découpage de la bande ainsi revêtue de ses deux films (40, 41). Un outil de découpe (60) permet de découper chaque élément de renforcement à la longueur voulue.

La figure 2 montre l'élément de renforcement ainsi réalisé qui comprend la couche interne (7) de fibres et de résine non-réticulée, et à sa surface supérieure un premier film solide de collage (40) et à sa surface inférieure un second film de collage (41). Dans cet état, l'élément de renforcement est manipulable par l'opérateur car le contact manuel ne se fait qu'avec les surfaces externes (400, 410) des films qui font office d'écran et qui sont solides et non-pégueux à température ambiante.

De préférence, les films (40, 41) sont des mono ou des multicouches de matière plastique à base de polymère (s) ou copolymère (s) greffé (s). On peut avantageusement utiliser des films de polymère (s) ou copolymère (s) du type polyoléfine greffé (s) par action d'acide carboxylique, d'anhydride d'acide carboxylique, ou d'ester d'acide carboxylique, par exemple par l'acide acrylique, par l'acide méthacrylique ou par l'acide maléique. Le film peut notamment être réalisé en polyéthylène greffé, par exemple en polyéthylène greffé par l'anhydride maléique. Le film peut aussi être constitué d'un copolymère d'éthylène et d'acétate de vinyle (EVA) greffé par action d'acide carboxylique ou d'anhydride d'acide carboxylique. Pour certaines applications particulières, il peut être avantageux d'utiliser certains films à base de polymères choisis parmi les ABS, les polyamides aliphatiques et les polyamides élastomères de la famille de polyether bloc-amide (type PEBA). Le choix des films est fonction de leur compatibilité de collage avec la nature des éléments du ski à assembler. Ces films ont une épaisseur variant de quelques microns à quelques dixièmes de millimètres.

Le document EP 0 428 887 appartenant à la demanderesse contient des informations sur les films susceptibles d'être utilisés. Son enseignement peut constituer un complément à la présente description par référence.

La figure 3 montre un exemple de réalisation de la seconde étape d'assemblage des éléments de la structure du ski dans un moule (8) avant fermeture.

On dépose à plat, dans le fond d'une première demi-empreinte (80), les éléments inférieurs constitutifs du ski. Ces éléments comprennent : la semelle de glissement (90), généralement en polyéthylène, limitée latéralement de part et d'autre par des carres métalliques (91, 92). Au-dessus, est déposé un premier renfort inférieur (70) encore humide, tel que réalisé précédemment. On dépose ensuite un noyau (93) préfabriqué à la forme désirée puis un second renfort supérieur (71) dans le même état que le premier renfort inférieur (70).

A certains endroits sur le ski, notamment aux endroits de montage des fixations, on peut envisager d'intercaler dans la structure des plaques de renforcement en acier, alliage d'aluminium, en stratifié fibres/résine ou encore phénolique (non représentées). On s'arrangera dans ce cas pour que la plaque de renforcement soit prise entre deux renforts préparés selon l'invention pour assurer un bon collage et une cohésion de l'ensemble.

Cette structure mécanique est ensuite recouverte d'un élément supérieur de protection et de décoration (94), constituée d'une ou plusieurs couches de matière thermoplastique choisie parmi les polyamides aliphatiques, les polyamides élastomères de la famille des polyethers bloc-amide (type PEBA), les ABS, les polyoléfines du type polypropylène et autres.

L'élément supérieur (94), bien que relativement souple, présente une certaine rigidité à basse température qui permet de le maintenir en forme légèrement arquée. Cette forme peut être maintenue par appui des bords de l'élément contre les parois latérales de la demi-empreinte inférieure (80).

On procède ensuite à la fermeture du moule et à une opération de chauffage de l'ensemble à une température et pendant une période de temps suffisante pour provoquer à la fois la réticulation de la résine de l'élément de renfort et la fusion de chaque film de collage qui après refroidissement réalisent la jonction entre les éléments de renfort (70, 71) et chacun des autres éléments constitutifs du ski.

Selon une caractéristique de l'invention, les températures nécessaires pour réaliser le passage de la phase "A" à la phase "C", dite de polymérisation, des résines époxydes "voie humide", sont inférieures aux températures de polymérisation des résines des renforts "prepegs".

En moyenne, des températures de l'ordre de 90 à 110°C de préférence 100°C pendant 10 à 20 mn, de préférence 12 mn, sont considérées comme des conditions suffisantes à l'obtention d'un degré de polymérisation suffisant.

Ainsi, les films de collage seront choisis parmi les matières thermofusibles à bas point de fusion. En tout état de cause, le point de fusion de ces films devra être inférieur ou égal aux températures de réticulation de la résine des éléments de renfort.

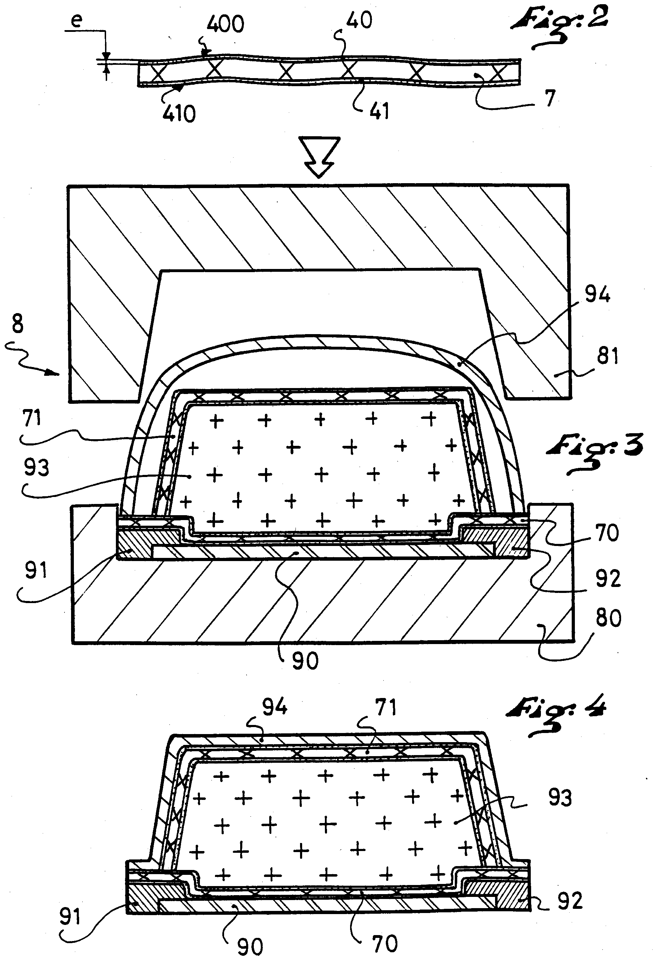

Comme le montre la figure 4, après sortie du moule, on obtient une structure dont la cohésion est réalisée sans risque de délaminage. A la température de moulage, l'élément supérieur (94) en matériau thermoplastique s'est conformé suffisamment à la forme de la demi-empreinte supérieure.

Bien entendu, la première étape de préparation des éléments de renforcement qui constitue l'essentiel de la présente invention est compatible avec d'autres étapes d'assemblage différentes de celle décrite dans la présente description qui n'est donnée qu'à titre d'exemple.

L'une des contraintes liée à l'utilisation de la voie humide selon l'invention réside dans le fait que les éléments de renforts imprégnés ne restent dans l'état non réticulé que pendant une durée de temps comprise entre 20 et 45 mn en fonction de la nature de la résine, la réactivité et le dosage en catalyseur, la température ambiante, l'hygrométrie, etc. Il est donc important que l'étape de préparation des éléments de renfort et l'étape d'assemblage se déroulent sur la même ligne de fabrication sans rupture de chaîne.

Bien entendu, l'invention n'est pas limitée aux modes de réalisation décrits et représentés à titre d'exemples, mais elle comprend aussi tous les équivalents techniques ainsi que leurs combinaisons et d'autres variantes sont également possibles sans pour autant sortir du cadre de l'invention.

## Revendications

1. Procédé de fabrication d'un ski comprenant une première étape de préparation par voie humide d'au moins un élément de renforcement (7, 70, 71) et une seconde étape d'assemblage dans un moule des autres éléments constitutifs (90, 91, 92, 93, 94) du ski avec ledit (lesdits) élément (s) de renforcement (7, 70, 71) obtenu (s) lors de la première étape, caractérisé en ce que la première étape comprend les opérations suivantes réalisées en continu :
- on opère l'imprégnation d'une bande (1) constituée de fibres sèches de renfort avec une résine thermodurcissable liquide contenant un durcisseur;
- on applique à température ambiante ou à froid sur chaque face (11, 12) de la bande imprégnée (1') un film solide de collage thermofusible (40, 41) qui adhère par simple contact en profitant de la pégosité naturelle de la résine non-réticulée;
- on découpe la bande ainsi revêtue aux dimensions voulues pour obtenir l'(les) élément (s) de renforcement (7, 70, 71) imprégnés mais manipulables à la main pour la mise en oeuvre de la seconde étape d'assemblage.

2. Procédé de fabrication selon la revendication 1, caractérisé en ce que lors de l'étape d'assemblage, l' (les) élément (s) de renforcement (7, 70, 71) est (sont) disposé (s) dans un moule (8) dans son (leur) état encore non-réticulé entre au moins deux éléments à assembler, puis on procède à une opération de chauffage à une température suffisante et pendant un temps suffisant pour provoquer à la fois la réticulation de la résine de l' (des) élément (s) de renfort (7, 70, 71) et la fusion de chaque film de collage (40, 41) qui après refroidissement assurent la jonction entre l' (les) élément (s) de renfort et chacun desdits autres éléments (90, 91, 92, 93, 94).

3. Procédé de fabrication selon la revendication 2, caractérisé en ce que l'opération de chauffage est réalisée pendant un temps compris entre 10 et 20 mn, de préférence 12 mn et à une température comprise entre 90 et 110°C, de préférence 100°C.

4. Procédé de fabrication selon la revendication 1 ou 2, caractérisé en ce qu'une opération d'essorage du surplus de résine entre un couple de cylindres calibreurs (30, 31) entre l'opération d'imprégnation et l'opération d'accostage des films de collage (40, 41) sur la bande de renfort imprégnée (1').

5. Procédé de fabrication selon l'une quelconque des revendications précédentes, caractérisé en ce que les films de collage (40, 41) sont appliqués en continu sur la bande imprégnée (1') à l'aide de rouleaux (50, 51) disposés de part et d'autres de ladite bande (1') et qui déroulent chacun un ruban de film (40, 41).

6. Procédé de fabrication selon la revendication 5, caractérisé en ce que l'on obtient l'accostage de chaque film (40, 41) sur chaque face (11, 12) de la bande de renfort par plaquage sous l'effet d'un rideau d'air pulsé (52) dirigé transversalement par rapport à la bande de renfort imprégné (1').

7. Procédé de fabrication selon l'une quelconque des revendications précédentes, caractérisé en ce que la résine thermodurcissable est du type époxyde.

8. Procédé de fabrication selon l'une quelconque des revendications précédentes, caractérisé en ce que l'on utilise des films de collage à base de polymère (s) ou copolymère (s) greffé (s) par action d'acide carboxylique, ou d'ester d'acide carboxylique.

9. Procédé de fabrication selon l'une quelconque des revendications 1 à 7, caractérisé en ce que l'on utilise des films à base de copolymère d'éthylène et d'acétate de vinyle (EVA) greffé par action d'acide carboxylique ou d'anhydride carboxylique.

10. Procédé de fabrication selon l'une quelconque des revendications 1 à 7, caractérisé en ce que les films sont choisis parmi les ABS, les polyamides aliphatiques et les polyamides élastomères de la famille des polyether bloc-amide (type PEBA).
